# EUROPEAN PATENT APPLICATION

(11) **EP 3 940 130 A1**
(43) Date of publication of application: **19.01.2022**
(21) Application number: 21184160.6
(22) Date of filing: 07.07.2021
(51) Int. Cl.: D04H 1/10, B21B 1/32, D04H 1/425, D04H 1/542, D21B 1/06, D21B 1/08, D21C 5/02, D21H 11/04, E04B 1/74, D21B 1/32, D21H 11/12, D21H 11/14, D21H 13/02, D21H 13/14, D21H 13/16, D21H 13/18, D21H 27/00

(54) **PROCESS FOR THE DEGRADATION OF CELLULOSE FROM HYGIENIC ABSORBENTS AND NAPPIES AND FOR THE PRODUCTION OF FELT AND INSULATING MATERIALS**

(30) Priority: 14.07.2020 IT 202000017005
(71) Applicant: Consiglio Nazionale Delle Ricerche, 00185 Roma (IT); Azzero CO2 S.r.l., 00184 Roma (IT)
(72) Inventor: PETRACCHINI, Francesco, 00015 Monterotondo (RM) (IT); PAOLINI, Valerio, 00015 Monterotondo (RM) (IT); DRIGO, Serena, 00184 Roma (IT); BIENTINESI, Ilaria, 00184 Roma (IT); FACCI, Enrico Giovanni, 00184 Roma (IT); PETRUCCI, Roberto, 00184 Roma (IT); IANNONI, Antonio, 00184 Roma (IT); TORRE, Luigi, 00184 Roma (IT)
(74) Representative: Currado, Luisa

(57) **Abstract**

A process is described for the production of felt from the degraded cellulose from used nappies and sanitary towels, the thermal insulation materials and the acoustic insulation materials containing said felt as well as building materials containing said insulation materials.

## Description

### Background of the invention

The present invention relates to the field of chemistry and in particular to a process for degrading the cellulose deriving from sanitary towels and for preparing felt and insulation materials.

### Background

Felts used as engineering materials are based on cotton and synthetic fibres. It is a kind of fabric manufactured by entangling fibres. Both synthetics and cotton-based fibres do not (always) require binders and also exist 100% in the form of real dry fibres. Felts generally exhibit the same chemical properties as the fibres of which they are made up. In this respect, cotton felts are characterised by excellent resistance to acids, whereas they are damaged if exposed to strong bases. They exhibit remarkable resistance to weathering and ageing and probably represent one of the most inert classes, among non-metallic engineering materials, towards non-aqueous liquids, oils and solvents. Cotton felts are generally not recommended under conditions of use in the dry state, in the presence of mechanical stress and temperatures above 85°C, due to the variations in the physical properties, but they can be used up to about 145°C, if used as spacers or seals or as oil absorbers or as components within lubrication systems. As for synthetic felts, these are available in a wide range of fibre type compositions, including the regenerated virgin cellulose, the cellulose acetate and the triacetate, polyamides, polyesters, acrylics, polyolefin, based on PTFE, etc. Depending on the composition, a virtually infinite range of physical and chemical properties can be achieved, for applications beyond the natural versatility of cotton fibres. Notable among the properties of this class of engineering materials are the chemical, solvent, thermal and biological stability, as well as humidity absorption, rapid drying after being wetted by water, abrasion resistance and dielectric properties. Cotton felts are produced as sheets in standard sizes, which depend on the system in place in the country where they are produced (e.g. in the USA there are standard sizes of 91.4 x 91.4 cm), according to a range of thicknesses ranging from 1.6 mm to 76 mm. There is also a wide range of densities: 254 kg/m3 678 kg/m3. Felt rollers are also available in widths comprised between 1500 mm and 1850 mm and lengths up to 160 m, as well as in standard thicknesses comprised between 0.80 mm and 25.4 mm. Both synthetic and cotton felts are easy to cut and manufacture. In addition, those of cotton lend themselves to many types of operations due to the structural elasticity, such as grinding, cutting, forming, extruding or other machine (tool) processing operations, by which many types of components are produced, such as polishing discs, round or tubular seals, ink rollers, specially shaped seals, closures, fillers, instrument covers and the like. In many cases the felts are stabilised by using resinous impregnating agents. This class of felts is finding increasing application in the form of flat sheets, from which special seals, closures and other applications can be obtained. Combinations of felts with plastic and elastomer-based sheets are produced for applications where resilience and low permeability are required. The use of felts as engineering materials covers a wide range of applications. The most important properties include resilience, absorption of mechanical, thermal and acoustic energy, high porosity-to-weight ratio, ageing resistance, chemical and thermal stability and solvent resistance. As a result, the uses include dry and wet product filtration, thermal and acoustic insulation, vibration and impact isolation, cushioning and packaging, polishing, liquid absorption and dispensers, seals and closures and mechanical impact dampers. A further application of the felts could be as a replacement for polyester fabrics or mats used as stabilisers for bituminous membranes, which are also used in the building industry.

Felts are produced by felting, which produces a compact layer, a few millimetres thick, made up of originally disunited wool (most commonly) or cotton fibres, by the joint action of various chemical and mechanical processes, resulting in a cohesive, waterproof, non-tearable material, which is resistant enough to be used as protection from the weather, fire and weapons. It is an irreversible process, the main characteristic of which is that there is no spinning, warping or weaving process. Felting of the fibres takes place through a compression action combined with heat and humidity, or through needle punching (a vertical movement of the needles which gives compactness to the fibres obtained at the at the exit of the card; the superposition of several layers of web will give this non-woven fabric a certain consistency, which can be increased by resin or heat setting processes).

European Patent No. EP1540074 describes a treatment for reducing the length of cellulose fibres recovered from waste materials in order to obtain a length of less than 35 mm, preferably less than 25 mm, plus preferably the length is comprised between 1 and 5 mm.

The international patent application, publication number WO2020096014, concerns the reduction of cellulose fibres from sanitary products used to make nanofibres, which uses ozone treatment to resolve the presence of lignin.

European Patent No. EP2622128 concerns the paper industry and proposes to reduce the length of cellulose fibres by using enzymes.

European Patent No. EP3567159 concerns the reduction of bad smells of cellulose fibres intertwined with polyacrylic acid through treatment with H₂O₂, to reduce the furfural content responsible for the bad smell.

Chinese patent no. CN102382264 describes that the presence of resins in materials produces a deodorising effect.

The US patent application, publication number US20190358360, proposes the use of trimethylamine (TMA) for smell reduction.

The international patent application, publication No. WO82/01507, describes a process for degrading cellulose fibres from wood-free and lignin-free waste involving a treatment for micro-fibrillation of the final product, batch blending, with textile fibres, non-recycled powder binders, non-biodegradable and not of biological origin, and phenolic resins, densification with calenders and compactor rollers.

Japanese patent no. JP6364004 describes a process for producing cellulosic pulp from nappies in which cross-linking agents, such as calcium chloride, and pH modulating agents, as well as vinyl substances are used. Additionally, chemical agents are used for bleaching and disinfection.

Japanese patent no. JPH108393A describes a method for preparing felts from degraded cellulose, in which thermoplastic fibres such as PET, PBT, PP and PE, biocomponents, bio polymers or bio composites, sheath-core are blended, a partial impregnation of the cellulose is performed by hot melting and moulding and compression to obtain the felt. Felt is mainly used for the production of containers; in addition, the compression moulding process is crucial to give the system geometric stability and tolerance to damage and loss of material.

US Patent No. US5418031 describes insulation materials derived from recycled paper felt in which the felt has a fibreglass face layer.

US Patent No. US5476617 describes a process for moulding cellulosic fibres from disposable nappies in which the binder is chosen from the group consisting of lignin-based adhesives, agricultural by-products, synthetic polymers including thermoplastics such as polyethylene or polypropylene, and thermosetting resins.

European patent EP1300511 describes polymeric thermoacoustic materials.

### Technical problem

Cellulose from used nappies and sanitary towels has a strong smell, especially when wet, which makes this waste product difficult to use, although it is normally sterilised in recovery processes. Furthermore, said waste material has a non-uniform colour.

The methods known in the art are characterised by the use of reagents and additives whose function is to reduce the unpleasant smell.

Surprisingly and unexpectedly, the inventors of the present invention have found that by subjecting the starting material, which is cellulose derived from used nappies and sanitary towels, to a treatment which reduces the length of the fibres below 18 mm and to special washing without the use of oxidising reagents and without the use of resins or other additives, a product without unpleasant smell and with a homogeneous colour is obtained. Furthermore, said process is not influenced by the presence of traces and impurities constituted by polyethylene and polypropylene, present in the starting material, thus avoiding the need for costly purification to remove them. Finally, the process has a low environmental impact in terms of both energy expenditure and processing waste.

The dry reduction in volume of the fibre already allows a partial separation from strongly smelly particles and organic residues, and blending in the presence of a special binder from starchy sources allows a further dissolution and encapsulation of the smelly particles themselves.

The same inventors have developed a process for the production of felt from degraded cellulose derived from used nappies and sanitary towels, which allows to obtain compact and stable felts, which are characterized by chemical stability to solvents, thermal stability and biological stability, ability to absorb humidity, ability to dry quickly after soaking in water, abrasion resistance, good dielectric properties and structural elasticity.

The process of the present invention differs from the documents known in the art and in particular from JP6364004, JPH108393A, US5418031 and EP1300511 in the following characteristics:
- the cellulosic starting material from nappies is subjected to a process of dry reduction of the dimensions;
- The cellulosic fibres are added with a minimum quantity of PLA and rayon (Lyocell cellulose) fibres with the aim of contributing to the stability of the final felt material, without using cross-linking agents such as calcium chloride, vinyl substances or pH modulating agents;
- No resinous agents or glass fibre are added;
- No bleaching and disinfection stages with the addition of chemical agents are carried out;
- no process stages specifically suitable for the elimination of water and of concentration of the solid phase are carried out, the elimination of water occurs during the felt production process step, once the system has been blended in the aqueous phase;
- defibering and/or defibration and maceration stages are not carried out, but on the contrary the physical bond among the fibres is to be accentuated (mechanical interlocking/entanglement), to give stability to the final felt product;
- the final felt product does not acquire stability through compression moulding, where thermo-melting of the binder takes place;
- the final felt product is stable but not rigid and can easily be wound, folded and manoeuvred without loss of particles.

### Object of the invention

The above technical problem is solved by providing a process for the production of felt from a starting product being degraded cellulose obtained from used nappies and sanitary towels and comprising the following steps:
a) reduction of the length of the cellulose fibres in order to obtain a length of less than 18 mm by optional grinding followed by filtration through a filter with 5 mm diameter holes;
b) reduction of the volume of the initial product obtained at the end of step a) by selective sieving according to fibre length in order to retain only those with fibre length of less than 18 mm and higher than 5-6 mm;
c) dispersion in water of the product obtained at the end of step b) with reduced volume and fibres with reduced length wherein steps from a) to b) enable the cellulose to be degraded (intended as homogenisation of the cellulose or removal from the same of impurities or unexpected substances);
d) addition of at least one hot-melt fibre with a fibre length not exceeding 20 mm
e) Further dispersion in water
f) Wet-laid stepe or alternatively Air-laid until the final felt product is obtained.
wherein the process is carried out under conditions that do not alter the pH of the solutions in steps c) and d).

A further object of the present invention is the felt obtained from cellulose obtained from used nappies and sanitary towels and degraded according to the aforesaid process.

A further object of the present invention are insulation materials comprising felt obtained by the above process, as well as building materials comprising said insulation materials.

Further features of the present invention will be evident and clear from the following detailed description with reference to experimental data presented herein.

### Detailed description of the invention

### Definitions

Within the meaning of the present invention, cellulose obtained from used nappies and sanitary towels means high quality cellulose, with traces of plastic materials composing the surface layer of the towel and super-absorbent materials assisting in the liquid absorption, which is in the form of cellulose fibre wads, roughly spherical with an average diameter of about 1.00 - 1.80 cm.

Within the meaning of the present invention, felt is defined as a fabric based on cotton and synthetic fibres, manufactured by entangling the fibres.

Within the meaning of the present invention, insulation materials are understood to mean both thermal and acoustic insulation materials. For example, thermal insulation panels, sound-absorbing panels, flooring supports, fabrics, coverings can be included in the field of building materials.

It is object of the present invention is a process for the production of felt from an initial product which is degraded cellulose obtained from used nappies and sanitary towels comprising the following steps:
a) reduction of the length of the cellulose fibres in order to obtain a length of less than 18 mm by optional grinding followed by filtration through a filter with 5 mm diameter holes;
b) reduction of the volume of the initial product obtained at the end of step a) by selective sieving according to fibre length in order to retain only those with fibre length of less than 18 mm and higher than 5-6 mm;
c) dispersion in water of the product obtained at the end of step b) with reduced volume and fibres with reduced length wherein the steps from a) to b) enable the cellulose to be degraded (intended as homogenisation of the cellulose or removal from the same of impurities or unexpected substances);
d) addition of at least one hot-melt fibre with a fibre length not exceeding 20 mm
e) Further dispersion in water
f) Wet-laid step or alternatively Air-laid until the final felt product is obtained.
wherein the process is carried out under conditions that do not alter the pH of the solutions of steps c) and d).

The initial product, which is degraded cellulose obtained from used nappies and sanitary towels, is pre-purified and sterilised.

In the process there is no operation suitable for altering the natural pH of the solutions and/or mixtures which remains neutral or basic. The starting material is degraded cellulose obtained from used nappies and sanitary towels in the form of cellulose fibre wads, roughly spherical with an average diameter of about 1.00 - 1.80 cm. Said wads in their inside contain relatively long fibres folded on themselves, together with:
i. super-absorbent material, which is at least partially eliminated in step d) of blending with hot-melt fibres,
ii. Residues of plastic materials, such as polyethylene, that do not need to be removed for the purpose of felt production, and
iii. Other impurities, which are eliminated in step e) of dispersion in water.

In steps a) and b) the reduction in volume involves the wads, and the individual fibres are reduced in size, at the end of steps a) and b) the fibre structure is much less tangled than at the beginning, so there are fewer wads and more groups of fibres held together by forces of a frictional nature.

At the end of steps a) and b), the starting material is now composed of micrometre-sized fragments in an amount equal to about 2% of the total volume that will be eliminated together with the residues in step c), fibres folded on themselves, with a total length higher 6 mm but less than 18 mm that make up about 12% of the total volume and the remainder of the total volume are fibres with a length of about 5 mm - 6 mm.

Sieving ensures that the size of the wads and fibres is reduced, in order to narrow the relative distribution of the lengths and to obtain a more homogeneous felt. The material is repeatedly ground until it is able to pass through the holes in the sieve.

Preferably at the end of step a) the cellulose fibres have a length comprised between 1 and 18 mm, more preferably between 1 mm and 5 mm, even more preferably 3 mm.

Preferably, in step d) the at least one hot-melt fibre with fibre length not exceeding 20 mm is chosen from the group consisting of polyvinyl alcohol fibre, polypropylene fibre, polylactic acid fibre, rayon fibre, lyocell cellulose fibre, poly-beta-hydroxybutyrate, polycaprolactone, Poly(3-hydroxybutyrate-co-3-hydroxyvalerate) and mixture thereof.

Although rayon fibres do not properly melt, they have been arbitrarily included in the definition of hot-melt fibres (or thermoplastic fibres or fibres subject to hot-melting), since at a temperature above 150°C they begin to weaken (soften); because of this behaviour, the temperature of 150°C is often assumed as the melting temperature, although this is not technically correct. This process cannot be reversed (irreversibility) and results in a brittle and damaged fibre. It is also recognised that these fibres are made by extruding (spinning) a solution or melt of the polymer through fine holes to form continuous filaments of typically 8-25µm in diameter (KJ: Niderostm, H. Walters, "Cord Reinforced Elastomers", Comprehensive Composite Materials Vol. 2 (2000), pages 77-105). For this reason, this type of fibre has been included in the definition of thermoplastic fibres, in order to distinguish it from thermosetting materials.

Preferably in step d) at least one hot-melt fibre with a fibre length not exceeding 20 mm is in a concentration comprised between 0% and 30% of the total weight of the solution.

Preferably, the polylactic acid fibre is added at a concentration comprised between 0% and 30%.

Preferably the Lyocell fibre is added at a concentration between 5% and 20% of the total weight of the solution.

Alternatively, in step d) at least one binder in the form of fibre or powder and mixtures thereof may be added to the hot-melt fibre with a fibre length not exceeding 20 mm.

Alternatively in step d) the hot-melt fibre with a fibre length not exceeding 20 mm is totally replaced by a binder in the form of fibre or powder and mixtures thereof.

Preferably when present, the binder is present in a concentration comprised between 0 and 30% of the total weight of the solution.

Preferably the binder is selected from the group consisting of: polylactic acid, polyethylene, polycaprolactone, polyhydroxybutyrate.

Preferably, fibre or powdered binder of polylactic acid is added in a concentration of 20% of the total weight of the solution and Lyocell in a quantity equal to 10% of the total weight of the solution.

Preferably in step e) dispersion in water takes place by mixing for a time comprised between 2 and 120 minutes, more preferably between 5 and 60 minutes, depending on the geometrical characteristics and the nature of the fibre, even more preferably it is 10 minutes.

Preferably in step e) the mixing speed is comprised between 100 and 10000 rpm, more preferably between 400 and 5000 rpm (depending on the nature and the characteristics of the fibre and even more preferably equal to 2400 rpm).

Preferably in step e) a second blending is carried out at a speed equal to 200 rpm for a time of 10 minutes until a cellulose concentration equal to 10 g/litre is obtained.

Preferably in step e) dispersion in water is carried out at a temperature comprised between room temperature and 40 °C, preferably it is room temperature.

The entire process is carried out under neutral pH conditions, so as not to change the nature of the fibre and not to increase the environmental impact of the final product.

In the case of cellulose fibre with a high lignin content, the process is carried out under basic pH conditions, with a value equal to 9, obtained by adding NaOH to purify the fibre so that it has a higher content of pure cellulose.

In step e) the fibres are untangled from each other, in order to create braids consisting of a smaller number of monofilaments, leading to an increase in the tendency of the fibres to interlock (crimping), thus creating a geometrically stable structure.

In step e) water or the water-based mixture surrounds the fibres and hydrogen bonds are formed with the hydroxyl groups of the cellulose fibres, promoting wettability and dispersion. The hot-melt fibres acting as a binder are not hydrophobic and are easily dispersed without the need to add dispersing or compatibilising agents.

In the wet-laid technique, the fibres suspended in the aqueous medium are deposited on a microperforated conveyor belt, which carries them up to a consolidation station. Randomly oriented layers of fibres leave the aforesaid belt, where they have undergone a preliminary forming, to reach a roller press or vacuum compaction system, which removes and partially recovers the excess water contained in the layers. The material is then completely dried and wound on rollers into strips.

Preferably in step f) air-laid is used when the use of the binder is not envisaged in the step, to obtain a very soft and isotropic final system.

Another object of present invention is the felt formed from cellulose which is obtained from used nappies and sanitary towels and degraded by the process comprising the steps of
a) reduction of the length of the cellulose fibres in order to obtain a length of less than 18 mm by optional grinding followed by filtration through a filter with 5 mm diameter holes;
b) reduction of the volume of the initial product obtained at the end of step a) by selective sieving according to fibre length in order to retain only those with fibre length of less than 18 mm and higher than 5-6 mm;
c) dispersion in water of the product obtained at the end of step b) with reduced volume and fibres with reduced length wherein the steps from a) to b) enable the cellulose to be degraded (intended as homogenisation of the cellulose or removal from the same of impurities or unexpected substances);
d) addition of at least one hot-melt fibre with a fibre length not exceeding 20 mm
e) Further dispersion in water
f) Wet-laid step or alternatively Air-laid until the final felt product is obtained.
wherein the process is carried out under conditions that do not alter the pH of the solutions in steps c) and d).

Preferably the felt has a surface density comprised between 180 g/m2 ÷ 600 g/m2.

Are also object of the present invention the insulation materials comprising the felt made from degraded cellulose obtained from used nappies and sanitary towels and obtained by a process comprising the following steps:
a) reduction of the length of the cellulose fibres in order to obtain a length of less than 18 mm by optional grinding followed by filtration through a filter with 5 mm diameter holes;
b) reduction of the volume of the initial product obtained at the end of step a) by selective sieving according to fibre length in order to retain only those with fibre length of less than 18 mm and higher than 5-6 mm;
c) dispersion in water of the product obtained at the end of step b) with reduced volume and fibres with reduced length wherein the steps from a) to b) enable the cellulose to be degraded (intended as homogenisation of the cellulose or removal from the same of impurities or unexpected substances);
d) addition of at least one hot-melt fibre with a fibre length not exceeding 20 mm
e) Further dispersion in water
f) Wet-laid step or alternatively Air-laid until the final felt product is obtained.
wherein the process is carried out under conditions that do not alter the pH of the solutions in steps c) and d).

Preferably the insulation materials are thermal insulation or acoustic insulation. By way of example, the insulation, thermal or acoustic materials can be included in the family of the building materials such as thermal insulation panels, sound absorbing panels, flooring substrates, fabrics, coatings.

### Examples

The felts were produced using the Wet-Laid technology. The devices used do not have a particularly high energy requirement (starting with powers of around 14 kW) nor do they require large spaces (25 m²) for the production on the aforesaid scale.

The fibres are suspended in an aqueous medium and deposited on a conveyor belt, which carries the same fibres up to a consolidation station. Randomly oriented layers of fibres leave the aforesaid belt, where they have undergone a preliminary forming, to reach a roller press, which removes and partially recovers the excess water contained in the layers.

The material is then completely dried and wound on rollers into strips.

The hot-melt fibres have a length not exceeding 15-20 mm to guarantee the mechanical properties of the final product.

The plant (productivity from 1 to 10 m/min) where the activity in question was carried out is based on four devices:
Furdrinier pilot-scale device, 510 mm wide, usually used for the production of paper from the cellulose pulp;
Drying system, 5 m long and capable of reaching a maximum temperature of 250°C;

### Calendering system;

### Winding system;

The cellulose fibres as received are similar to cotton flakes, the usability of which in the chosen process requires careful consideration, especially in relation to the great length of these fibres. The fibre has been reduced in size in order to maintain a length of less than 15 mm.

The grinding carried out, given the softness of the fibre, did not involve any energy costs and therefore no major environmental aspects.

The first operation consists in weighing the required quantity of fibre, using scales with precision to the tenth of a gram.

The next step is the dispersion of the expected quantity of fibre in water and its relative separation, trying to avoid any residue or accumulation of particulates or small fibres.

Powder based on polylactic acid (weight fraction equal to 20%) and Lyocell cellulose (weight fraction equal to 10%) was also inserted in the chosen system, with the aim of contributing to the stability of the final material, as a real binder system in the former and as a support in the second.

Blending was carried out inside a high shear mixer (called pulper). This system has a capacity of about 40 litres and is made of stainless steel and polycarbonate.

The prescribed quantity of fibres inherent in the binder and those of cellulose were inserted in the container, into which about 40 litres of water had been poured. Stirring was conducted for about 10 minutes at 2400 rpm. The fibre concentration was equal to 10 g/litre.

After this step, the material is inserted in another vessel in which a further, slower dispersion takes place, the aim of which is to keep the fibres under stirring and not allow them to agglomerate before they are brought into the non-woven forming zone. The container has a capacity of 1200 litres, with two impellers which are driven by an electric motor provided with a frequency converter, which allows the blending speed to be varied.

The blending speed was equal to 200 rpm and the blending time was 10 minutes. The concentration of solid material in the water was equal to 1g/litre, thanks to the gradual addition of water.

This step contributed to untangling the fibres from each other, to creating braids consisting of fewer monofilaments, thus resulting in an increase of the tendency of the fibres to interlock (crimping), thus, to creating a geometrically stable structure, even independently of the binders.

The dispersion step is extremely important because it allows the water or water-based mixture to surround the fibres, thanks also to the presence of the hydroxyl groups (-OH) hanging from the cellulose fibres, which favour the hydrogen bonding thereof with the aqueous phase and their dispersion in it. Hence, there is no need for the addition of any chemical element capable of improving the wettability and the aforesaid dispersion.

The binder fibres are not hydrophobic, so they can be easily dispersed in and wetted by the aqueous phase, even without the aid of a dispersant or compatibiliser.

The dispersion of the fibres also occurs thanks to mechanical blending, otherwise the various strands would tend to stay together, creating zones rich in fibre and zones with a low concentration, due to various phenomena such as friction between the fibres themselves, cohesion forces, capillary forces, etc.

Once the fibre appeared to be well dispersed in the aqueous medium, the mixture was transferred to the non-woven fabric forming zone using a hydraulic pump. The hydroforming machine is a device from PILL NASSVLIESTECHNIK GmbH.

The width of the non-woven forming zone is equal to 510 mm, the angle of inclination is equal to 20° and the fibre concentration is 0.33 g/L. The speed applied, as mentioned, can vary from 1 to 10 m/min.

In the wet-laid system, two dispersion tanks were used: one is used, while the other remains empty. The mixture is delivered from the tank to the non-woven forming zone by a hydraulic pump. Before reaching the hydroformer, the fibre-water mixture is diluted with additional water, which is driven by a dilution pump from the water tank. Thus the concentration of fibres in water at the entrance to the non-woven forming zone is lower: in particular it changes from 1 g/l in the dispersion tank to 0.33 g/l in the non-woven forming zone.

Upon reaching the hydroformer, the mixture passes through the non-woven forming belt, which is porous and acts as a filter. This belt carries water to the bottom of an airtight chamber, while the fibres settle on the belt, forming the non-woven fabric.

The watertight chamber, located behind the non-woven forming belt, is connected in the lower part to the water circulation pump, which brings the filtered water back into the tank, allowing significant savings. This is because it is constantly recirculated, so it is largely reused (if one excludes what remains in the non-woven fabric: humidity).

The upper part of the chamber is connected to a fan that creates an air vacuum in this zone, sucking more content into the non-woven. To create the required vacuum, the suction system can rely on a flow rate of about 4 m3/min and the possibility of creating a local pressure equal to 200 mbar.

The pumps used for fluid transfer are rotary and have a stainless steel helical rotor, which is in contact with an EPDM stator. Also in this case the frequency converter of the electric motor, with which they are provided, allows to vary the rotation speed.

The next step concerns the continuous drying of the previously formed fibre grid immediately at the exit of the Fourdrinier. The drying process allows the fibres of polymeric material contained in the mixture to be melted, thus consolidating the lattice and eliminating the excess humidity left.

The process ends with the step of calendering and rolling the non-woven fabric produced, by means of a special apparatus.

In the calendering step, the drying speed was set at 1 m/min, by means of a temperature profile ranging from room temperature to 190°C, a level also sufficient, as mentioned, to melt the polymer fibres present. In total, the material spent a time equal to 7 minutes inside the module. At the exit, the material is subjected to calendering, by means of a winding system.

In the felt production process, thermoplastic fibres were also used in addition to the cellulose fibres of the starting material. Additional cellulose fibres (Lyocell) were used for the formation of a non-woven web, while polylactic acid (PLA) fibres were used as a binder for the consolidation of the felt.

The latter had a melting temperature comprised between 130°C and 170°C, a length of 6 mm and a count equal to 1.70 dtex. As regards the cellulose fibres not belonging to the starting material, they do not have a mere melting point, but a degradation temperature equal to 190°C, a maximum length of 4 mm and a count of 1.70 dtex.

The cellulose fibre size of the used nappies after reduction was comprised in the range between 1 mm and 5 mm (the material was completely defibrillated).

The system was based on a quantity of original cellulose fibre equal to 70% of the total weight, a quantity of Lyocell equal to 10% and a quantity of PLA equal to 20% of the total weight. The aim was to obtain felts with a surface density equal to 300 g/m2. The actual weight was measured to be equal to 287 g/m2. The final material may contain residual plastic particles, which have in no way affected the viability of the product.

The use of felt for the production of solid panels (mainly aimed at the production of components for the building sector) has been verified through the compression moulding of tiles of size 250 mm x 250 mm by 6 mm.

The process times were significantly shorter, as the material was almost dry and contained more than enough binder. The possibility of varying the density of the aforesaid panels has been verified by housing different layers of felt in the same volume: from 4 to 12 layers (but also up to 24), obtaining mechanical properties that increased as the number of layers increased (thus such as density). This without significantly losing the heat-insulating and sound-absorbing properties of the felt itself.

The moulding temperature was equal to 190°C, used both in the contact step and in the actual compression step. The first step (contact) was carried out for 5 minutes at a pressure of 10 bar, while the second step (mere compression) was carried out for the same time, but at a pressure of 75 bar. The cooling step was carried out with closed mould, by circulating water in the appropriate channels, located between the plates of the press, up to a temperature close to 80°C.

The panels produced were all sufficiently compact.

Both the felt and the panels do not show any tendency to lose material, on the contrary they are very tolerant to damage and do not emit a bad smell.

Tests were carried out on different types of artefacts, i.e. on a single layer of felt, made by cutting it with simple scissors, on 4 layers of felt subsequently coupled using an adhesive (in this case the Acronal S 560 system), without applying high pressures from the outside, and finally on a pressed panel, made up of 6 layers of felt, cut by means of a hacksaw from a sheet measuring 250 mm x 250 m x 6 mm.

The surface density of a single felt layer (nominal thickness 2.00 mm) is 287 g/m².

Several layers of felt were superimposed one on top of the other; the addition of each individual felt layer to the starting four layers results in an increase in volume density by almost 51 kg/m³ and in surface density by about 0.26 kg/m².

Starting with the systems based on only 4 layers of felt, the addition of each individual layer results in an increase in conductivity and thermal capacity equal to 9.00*10⁻³ W/mK and 5.80*10⁻² J/m3K, respectively.

As far as thermal diffusivity is concerned, it is not possible to establish a trend as a function of the number of layers, and the average value is around 2.47 ± 0.19 m²/sec. Table 1 below shows the data relating to the volumetric and surface density of the panels made.

**Table 1**

| **No. of layers** | **Volume density (kg/m³)** | **Surface density (kg/m²)** |
|---|---|---|
| 4 | 231.00 ± 8.00 | 1.39 ± 0.02 |
| 6 | 322.00 ± 6.00 | 1.93 ± 0.04 |
| 8 | 444.00 ± 12.00 | 2.66 ± 0.07 |
| 12 | 634.00 ± 16.00 | 3.44 ± 0.04 |

Table 1 below shows the thermal conductivity data of the components made.

**Table 2**

| **No. of layers** | **λ (W/mK) *10⁻²** | **Cρ (J/m³K) *10⁵** | **α (m²/s) *10⁻⁷** |
|---|---|---|---|
| Felt | 6.28 ± 0.07 | 2.73 ± 0.06 | 2.30 ± 0.03 |
| 4 | 8.13 ± 0.08 | 3.09 ± 0.10 | 2.63 ± 0.06 |
| 6 | 9.88 ± 0.05 | 4.15 ± 0.05 | 2.38 ± 0.02 |
| 8 | 12.10 ± 0.11 | 5.45 ± 0.08 | 2.23 ± 0.03 |
| 12 | 15.40 ± 0.12 | 7.72 ± 0.08 | 2.63 ± 0.06 |

It can be seen that the non-compacted felts have a lower thermal conductivity than the compacted systems (i.e. the panels), which is to be expected as they are less dense. In this respect, the conductivity is about twice that of common panels based on polystyrene or polyurethane foam. Hence it is believed that the felt deserves considerable interest for its use as a thermal insulation system.

With regard to the tests to determine the tensile mechanical properties, the material appears to be stronger and performs better in the longitudinal direction than in the transverse direction. In this respect, the load at break and the strength factor are about 25% higher than in the transverse direction. Table 3 below shows the mechanical properties in the longitudinal and transverse directions with respect to the winding direction.

**Table 3**

| **Direction** | **Load (N)** | **Deformation (%)** | **Resistance factor (N/m)** |
|---|---|---|---|
| Longitudinal | 47.23 ± 1.06 | 3.81 ± 0.21 | 188.92 ± 4.26 |
| Transverse | 35.57 ± 1.62 | 3.52 ± 0.28 | 146.27 ± 6.47 |

As far as the bending properties are concerned, it appears natural that there is a very important increase in the main characteristics, such as the yield strength (σ_{γ}), the breaking strength (σᵣ) and the Young's modulus (E). It can be seen that the yield strength and the breaking strength become closer and closer, until they coincide, with the increase in the number of layers of felt. It is believed that the yield strength is the property to be taken into greater consideration to define the limits of use of the panels in question, since this or the corresponding deformation (about 2.44% for each type of panel), the component, whatever the number of layers, remains irreversibly deformed.

Both the stiffness and the yield strength increase very significantly as the number of felt layers in the system increases: each additional layer over the initial four results in an increase in the yield strength of about 2.93 MPa and about 195 MPa in terms of modulus (stiffness). This compares with an increase in density of about 51 kg/m³. Table 4 below shows the mechanical bending characteristics.

**Table 4**

| **No. of layers** | **σ_{y} (MPa)** | **σᵣ (MPa)** | **E (MPa)** |
|---|---|---|---|
| 4 | 2.34 ± 0.13 | 2.42 ± 0.14 | 195.92 ± 14.14 |
| 6 | 6.38 ± 0.17 | 6.47 ± 0.17 | 458.73 ± 19.68 |
| 8 | 11.81 ± 0.37 | 11.88 ± 0.43 | 808.07 ± 49.14 |
| 12 | 25.45 ± 1.14 | 25.45 ± 1.14 | 1729.70 ± 112.92 |

Table 5 below shows the specific mechanical bending characteristics.

**Table 5**

| **No. of layers** | **σ_{y}/ρ (s²) *10⁴** | **σᵣ/ρ (s²) *10⁴** | **E/ρ (s²) *10⁴** |
|---|---|---|---|
| 4 | 1.01 | 1.05 | 84.80 |
| 6 | 1.98 | 2.01 | 142.00 |
| 8 | 2.66 | 2.68 | 182.00 |
| 12 | 4.01 | 4.01 | 273.00 |

The small sample, inherent in the material based on 4 layers of felt glued together, shows extremely interesting damping values. The value of the aforesaid property fluctuates in the range comprised between 30 dB and 50 dB. With regards to the sample with a diameter equal to 100 mm, the damping value fluctuates in the range comprised between 10 dB and 15 dB. In the final zone of the graph it seems to increase further. Taking the minimum value obtained at low frequencies and the maximum value obtained at high frequencies as a reference, it can be said that the material is capable of attenuating the sound power from 10 to 100,000 times. Table 6 below shows the sound absorption data.

**Table 6**

| **Material** | **Thickness (mm)** | **Diameter (mm)** | **TL (dB)** | **TL/h (dB/mm)** |
|---|---|---|---|---|
| Felt - single layer | 1. 90 | 29 | 5 | 2.63 |
| | | 100 | 2.5 ÷ 4.0 | 1.32 ÷ 2.11 |
| | | ***Maximum value*** | 5 | 2.63 |
| Felt - 4 layers glued | 5.50 | 29 | 30 ÷ 50 | 5.45 ÷ 9.09 |
| | | 100 | 10 ÷ 15 | 1.98 ÷ 2.73 |
| | | ***Maximum value*** | 50 | 9.09 |
| Panel - 6 layers | 5.60 | 29 | 15 ÷ 20 | 2.68 ÷ 3.57 |
| | | 100 | 10 ÷ 14 | 1.79 ÷ 2.50 |
| | | ***Maximum value*** | 20 | 3.57 |

From the above results, the material showed very interesting insulating and sound absorbing characteristics; conductivity is much lower than pressed panels or loose cellulose: it is about 30% lower than these and about twice that of a common polyurethane foam. The felts showed adequate aesthetic performance, good damage tolerance (adequate tensile strength properties), uniform colour and were odourless.

As far as the self-supporting panels made from the felts are concerned, the mechanical properties increase significantly as the number of layers increases, with little change in density and, above all, in thermal conductivity. This last test is considered to be very interesting because it allows a certain flexibility in being able to design and manufacture (customisation) the panels in question on the basis of the technical specifications required, not only in terms of self-supporting capacity, but also of thermal and acoustic performance. It is also possible to increase the number of layers with a minimum increase in the thickness in order to achieve an increase in the mechanical properties where necessary. The felt obtained is in line with the characteristics of the best products on the market in this category.

## Claims

1. Process for the production of felt from an initial product which is cellulose obtained from used nappies and sanitary towels comprising the following stages:
a) reduction of the length of the cellulose fibres in order to obtain a length of less than 18 mm by optional grinding followed by filtration through a filter with 5 mm diameter holes;
b) reduction of the volume of the initial product obtained at the end of step a) by selective sieving according to fibre length in order to retain only those with fibre length of less than 18 mm and higher than 5-6 mm;
c) dispersion in water of the product obtained at the end of step b) with reduced volume and fibres with reduced length wherein the steps from a) to b) enable the cellulose to be degraded (intended as homogenisation of the cellulose or removal from the same of impurities or unexpected substances);
d) addition of at least one hot-melt fibre with a fibre length not exceeding 20 mm
e) Further dispersion in water
f) Wet-laid stage or alternatively Air-laid until the final felt product is obtained.
wherein the process is carried out under conditions that do not alter the pH of the solutions in steps c) and d).

2. Process according to claim 1 wherein in step a) the reduction of the length of the cellulose fibres is until a length comprised between 1 mm and 5 mm is obtained.

3. Process according to claim 1 wherein in step d) the at least one hot-melt fibre with fibre length not exceeding 20 mm is selected from the group consisting of polyvinyl alcohol fibre, polypropylene fibre, polylactic acid fibre, rayon fibre, lyocell cellulose fibre, poly-beta-hydroxybutyrate, polycaprolactone, Poly(3-hydroxybutyrate-co-3-hydroxyvalerate) and mixture thereof.

4. Felt obtained by the process according to claim 1 comprising the following steps:
reduction of the length of the cellulose fibres in order to obtain a length of less than 18 mm by optional grinding followed by filtration through a filter with 5 mm diameter holes;
a) reduction of the length of the cellulose fibres in order to obtain a length of less than 18 mm by optional grinding followed by filtration through a filter with 5 mm diameter holes;
b) reduction of the volume of the initial product obtained at the end of step a) by selective sieving according to fibre length in order to retain only those with fibre length of less than 18 mm and higher than 5-6 mm;
c) dispersion in water of the product obtained at the end of step b) with reduced volume and fibres with reduced length wherein the steps from a) to b) enable the cellulose to be degraded (intended as homogenisation of the cellulose or removal from the same of impurities or unexpected substances);
d) addition of at least one hot-melt fibre with a fibre length not exceeding 20 mm
e) Further dispersion in water
f) Wet-laid stage or alternatively Air-laid until the final
felt product is obtained.
wherein the process is carried out under conditions which do not alter the pH of the solutions in steps c) and d).

5. Felt according to claim 4 **characterized by** a surface density comprised between 180 g/m2 and 600 g/m2.

6. Insulation materials **characterized in that** they comprise the felt of claim 4.

7. Insulation materials according to claim 6 **characterized in that** they are thermal insulators or acoustic insulators.

8. Use of the insulation materials according to claim 6 for the production of building materials.

9. Building materials comprising the insulation materials of claim 6.
